# EUROPEAN PATENT SPECIFICATION

(11) **EP 4 087 887 B1**
(45) Date of publication and mention of the grant of the patent: **18.12.2024**
(21) Application number: 21702307.6
(22) Date of filing: 11.01.2021
(51) Int. Cl.: B32B 3/06, C08G 18/40, C08G 18/42, C08G 18/48, C08G 18/76, C08K 3/013, B32B 27/40, E04F 13/077, E04F 15/00, B32B 3/30, B32B 7/12, C08K 3/22, C08K 7/02, E04F 13/08, E04F 13/18, E04F 15/02, E04F 15/10

(54) **PANEL, IN PARTICULAR A FLOOR PANEL, CEILING PANEL OR WALL PANEL, AND USE OF AN ADDITIONAL LAYER IN A LAMINATED MULTI-LAYER STRUCTURE OF A PANEL**
TAFEL, INSBESONDERE BODENTAFEL, DECKENTAFEL ODER WANDTAFEL, UND VERWENDUNG EINER ZUSÄTZLICHEN SCHICHT IN EINER LAMINIERTEN MEHRSCHICHTSTRUKTUR EINER TAFEL
PANNEAU, EN PARTICULIER PANNEAU DE PLANCHER, PANNEAU DE PLAFOND OU PANNEAU MURAL, ET UTILISATION D'UNE COUCHE SUPPLÉMENTAIRE DANS UNE STRUCTURE MULTICOUCHE STRATIFIÉE D'UN PANNEAU

(30) Priority: 09.01.2020 NL 2024632
(43) Date of publication of application: 16.11.2022
(73) Proprietor: NORTHANN BUILDING SOLUTIONS LLC, Sacramento, CA 95828 (US)
(72) Inventor: LI, Lin, Elk Grove, California 95758 (US)
(74) Representative: Forresters IP LLP
(86) International application number: PCT/IB2021/050165
(87) International publication number: WO 2021/140493

(56) References cited:
- EP-A1- 3 095 614
- EP-B1- 3 095 614
- US-A1- 2004 071 978
- US-A1- 2014 196 982

## Description

The present invention according to a first aspect, relates to a panel in particular a floor panel, ceiling panel or wall panel. In a second aspect, the invention relates to the use of an additional layer in a laminated multi-layer structure of a panel.

In the field of building, the use of panels which are based on a laminated multi-layer structure is generally known. They have proven highly versatile for covering surfaces, such as a floor, a wall and a ceiling. In particular it is attractive to use a laminated multi-layer structure which comprises:
- a core layer,
- a decorative layer above the core layer,
- a transparent top layer above the decorative layer.

Recent developments have been directed to a specific modification of the top side of the top layer of such a panel once the multi-layered structure is formed, which is referred to as embossing. In embossing, the top side of the top layer is provided with a relief which mimics a natural top surface such as perceived from wooden panels. A special way of embossing is embossing in register, which provides a relief that corresponds with the decorative layer, for instance corresponding with a decorative image of a wooden panel surface with a grain pattern. EP3095614A1 for example relates to a method for manufacturing decorative surfaces. US2014/0196982A1 for example provides sound absorbing or attenuating laminate flooring materials. US2004/0071978 A1 for example provides a laminate and the method for its formation.

In producing such panels, the embossing of the top layer may be executed by several techniques, such as compression, milling or chemical etching of the top layer. After the relief is embossed on the top surface, further finishing steps may be needed such as finely grinding or sanding of the embossed surface.

It has been found that during embossing and/or finishing of the top layer of a panel, the integrity or the appearance of the underlying decorative layer may be negatively affected, and may even be damaged.

It is therefore an objective of the invention to further secure that in producing a laminated multi-layered panel such as defined above, it is prevented that the embossing and finishing steps for the top layer could alter the integrity or appearance of the underlying decorative layer.

The present invention achieves the above objective by the provision of a panel, in particular a floor panel, ceiling panel or wall panel, having a laminated multi-layer structure which comprises
- a core layer,
- a decorative layer above the core layer,
- a transparent top layer above the decorative layer, and
- an intermediate layer situated between the decorative layer and the top layer,
which intermediate layer is transparent, and at least 75 wt.% is made from a protective material which comprises a polyurethane composition which is the reaction product of a polyester polyol, a polyether polyol and an isocyanate, and wherein the polyurethane composition is a thermoset polymer material.

It has been found that the specific protective material of the intermediate layer has a sufficiently high hardness to protect the decorative layer against any abrasion or indentation during the embossing and finishing of the top layer of the panel.

In the context of the panel according to the invention, the terms 'above' and 'upper' relate to the direction to which the panel faces once it is applied on a floor or likewise. The term 'substantially' encompasses that at least 75 wt.%, and preferably at least 90 wt.%, most preferably 100 wt.%, of the intermediate layer is made from the protective material.

The decorative layer may contain a (printed) decorative image on the upper side of the decorative layer which is visible when the panel is used as a floor panel, ceiling panel, or wall panel. The intermediate layer is of a satisfactorily transparent quality so that the visibility of the decorative image is not affected by the intermediate layer.

In the panel according to the invention, it is typical that the respective layers of the laminated multi-layer structure are directly or indirectly attached onto each other.

The polyurethane composition of the panel of the invention is a thermoset polymer material, and in particular the polyurethane composition is a cross-linked polymer.

The thermoset polymer material is in the art also known as a hot-melt adhesive, wherein thermosetting typically occurs over a heat trajectory of 100 - 160 °C.

When producing the panel, the intermediate layer could be applied in a hot-melt state in order to be solidly attached to a neighbouring layer of the panel.

In the panel according to the invention, the polyester polyol preferably has a weight average molar mass Mw in the range of 500 to 20,000, and comprises preferably a polyester polyol having linear monomers of 5 to 8 carbon atoms.

The polyester polyol may include a polyester glycol, such as for instance a polyester formed by reacting hexane diol with adipic acid.

Further in the panel according to the invention, the polyether polyol preferably has a weight average molar mass Mw in the range of 400 to 10,000, and comprises preferably a polyether polyol having branched monomers of 2 to 5 carbon atoms.

The polyether polyol may include a polyether glycol, such as polypropylene glycol.

It is in particular preferred in the panel according to the invention, that the isocyanate is a di-isocyanate and/or tri-isocyanate, preferably methylene diphenyl di-isocyanate.

With respect to the protective material, the following preferred weight percentages apply:
- the protective material contains 5 - 50 wt.% reacted polyester polyol;
- the protective material contains 10 - 40 wt.% reacted polyether polyol;
- the protective material contains 5 - 20 wt.% reacted isocyanate.

It is furthermore preferred that the protective material comprises a filler material as an additive, such as microfibers and/or alumina, preferably in a range of 0.2 - 5 wt.% with respect to the protective material.

This type of filler material further contributes to the required hardness of the protective material, and thus enhances the anti-abrasive properties of the protective material.

In the panel according to the invention, it is preferred that the intermediate layer is directly attached onto the decorative layer and/or onto the top layer.

As such, the required visibility of the decorative layer can be accomplished most expediently.

In the context of the panel according to the invention, it is preferred that the top side of the top layer is embossed with a relief, which relief preferably corresponds to the decorative image of the decorative layer.

It is furthermore preferred that in the panel according to the invention, the intermediate layer has a grammage of 20 up to 80 g/m2.

Such a grammage determines the thickness of the intermediate layer to such a range, that an optimum protection for the decorative layer as well as an optimum visibility of the decorative layer is achieved.

It is advantageous in the panel according to the invention that the intermediate layer is colorless. As such, the appearance of the decorative layer is not altered by any hue on the top side of the panel.

It is preferred in the panel according to the invention that the intermediate layer has a relatively low reflectance of 4%, 3%, 2% or lower.

Such an intermediate layer has a reflectance value that is comparable to glass, or may even be lower than glass. The reflectance value is also referred to in the field as the reflection coefficient of a material.

By virtue of such a reflectance value of the intermediate layer, an optimum visibility of the underlying decorative layer is achieved, because the amount of transmitted light is relatively high while only small amounts of light are reflected.

In the context of the invention, it is further preferred that the intermediate layer has a relatively low refractive index, preferably between 1.0 and 1.3.

Further preferred features of the panel according to the invention include:
- the panel comprises a backing layer attached to a lower side of the core layer;
- the panel thickness is between 3 and 10 mm;
- the panel is flat and has a rectangular contour, comprising four side edges.

In a further preferred embodiment, the panel according to the invention, comprises a first panel edge comprises a first coupling profile, and a second panel edge, preferably opposite to the first panel edge, comprising a second coupling profile being designed to engage by interlocking with said first coupling profile of an adjacent panel, both in horizontal direction and in vertical direction, wherein the first coupling profile and the second coupling profile are preferably configured such that two of such panels can be coupled to each other by means of a lowering movement.

Such a panel allows for adequately covering a flat surface with a multitude of interconnected panels and thus achieving a covering of panels that is robust as a whole.

Additionally or alternatively to the above first and second coupling profiles, the panel may further comprise at least one third coupling profile and at least one fourth coupling profile located respectively at a third panel edge and a fourth panel edge, wherein the third coupling profile comprises:
- a sideward tongue extending in a direction substantially parallel to the upper side of the core,
- at least one second downward flank lying at a distance from the sideward tongue, and
- a second downward groove formed between the sideward tongue and the second downward flank,

wherein the fourth coupling profile comprises:
   - a third groove configured for accommodating at least a part of the sideward tongue of the third coupling profile of an adjacent panel, said third groove being defined by an upper lip and a lower lip, wherein said lower lip is provided with an upward locking element,
wherein the third coupling profile and the fourth coupling profile are configured such that two of such panels can be coupled to each other by means of a turning movement, wherein, in coupled condition: at least a part of the sideward tongue of a first panel is inserted into the third groove of an adjacent, second panel, and wherein at least a part of the upward locking element of said second panel is inserted into the second downward groove of said first panel.

In a second aspect, the invention relates to the use of an additional layer in a laminated multi-layer structure of a panel in particular a floor panel, ceiling panel or wall panel,
wherein the additional layer is preferably transparent, and is substantially made from a protective material which comprises a polyurethane composition which is the reaction product of a polyester polyol, a polyether polyol and an isocyanate.

Such a use of an additional layer forms a protective layer, which protects the laminated structure of the panel to any high-impact techniques which are performed during the production of a panel, such as during embossing of a relief on a top layer of the panel.

In the use of an additional layer according to the invention, it is preferred that the polyurethane composition is a thermoset polymer material, wherein preferably the polyurethane composition is a cross-linked polymer.

Such preferred types of polyurethane composition have a suitable hardness for the intended function of the additional layer, i.e. a hardness which is sufficiently high to protect the laminated multi-layer structure against any abrasion or indentation during the production of the panel.

In general, the use according to the invention may include preferred features relating to the panel and the respective additional layer, which features correspond to the preferred features already described above in view of the panel and the respective intermediate layer according to the first aspect of the invention.

In particular it is preferred in the use of an additional layer according to the invention, that the laminated multi-layer structure of the panel comprises:
- a core layer,
- a decorative layer above the core layer,
- a transparent top layer above the decorative layer,
and the additional layer is applied as an intermediate layer situated between the decorative layer and the top layer.

As already explained above, such an intermediate layer is most effective in protecting the decorative layer against any abrasion or indentation during the production of the panel.

In general, it is preferred that the use of an additional layer according to the second aspect of the invention is applied in a panel according to the first aspect of the invention.

### Example

The invention will be further elucidated by specific preferred embodiments which are shown in the appended figures, wherein:
- Fig. 1 shows a cross-section of a laminated multi-layer structure of the panel according to the invention;
- Fig. 2 and 3 show in cross-section two types of engaging coupling profiles suitable for a panel according to the invention.

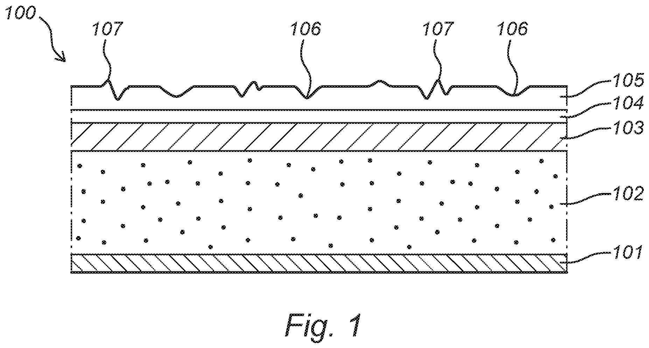

Figure 1 shows schematically a cross-section of a laminated multi-layer structure of a panel 100, which is constituted from multiple layers which are directly connected to each other. These layers include a backing layer 101, a core layer 102, a decorative layer 103 provided with a decorative image, an intermediate layer 104 and an embossed top layer 105. The embossed top layer contains depressions 106 and elevations 107, so that a relief is formed on the top surface of the top layer which corresponds to the pattern of the decorative image that is facing upwards from the decorative layer 105. The intermediate layer 104 is formed from a protective material in accordance with the invention, and is transparent and colorless.

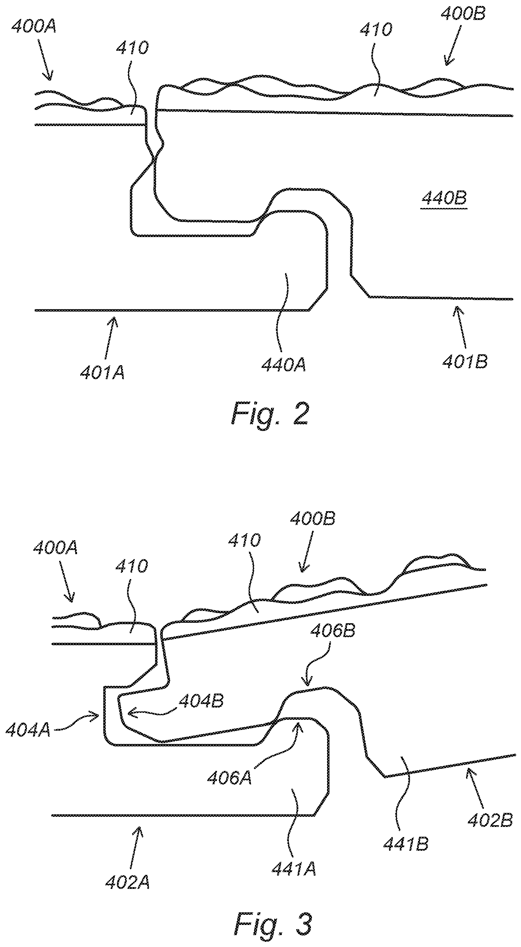

Figures 2 and 3 show two types of engaging coupling profiles 401A, 401B resp. 402A, 402B, of two interconnecting panels 400A, 400B according to the present invention. The panels 400A and 400B comprise an embossed top layer 410. As a whole, each panel has a laminated multi-layer structure in accordance with figure 1 (which is however not further shown in detail in figures 2 and 3).

Figure 2 shows panels 400A and 400B, which respectively comprise a first panel edge 440A comprising a first coupling profile 401A, and a second panel edge 440B opposite to the first panel edge 440A, comprising a second coupling profile 401 B being designed to engage by interlocking with said first coupling profile 401A of an adjacent panel, both in horizontal direction and in vertical direction, wherein the first coupling profile 401A and the second coupling profile 401B are configured such that two of such panels can be coupled to each other by means of a lowering movement.

Figure 3 shows panels 400A and 400B, which respectively comprise a third coupling profile 402A and a fourth coupling profile 402B located respectively at a third panel edge 441A and a fourth panel edge 441 B. The third coupling profile 402A and the fourth coupling profile 402B are configured such that the two panels 440A, 440B can be coupled to each other by means of a turning movement, wherein, in coupled condition at least a part of a sideward tongue 404B of a first panel is inserted into a groove 404A of an adjacent, second panel, and wherein at least a part of an upward locking element 406A of said second panel is inserted into a second downward groove 406B of said first panel.

The invention is defined in the attached claims. The verb "comprise" and conjugations thereof used in the description are understood to mean not only "comprise", but are also understood to mean the phrases "contain", "substantially consist of", "formed by" and conjugations thereof.

## Claims

1. Panel (100), in particular a floor panel, ceiling panel or wall panel,
having a laminated multi-layer structure which comprises:
- a core layer (102),
- a decorative layer (103) above the core layer,
- a transparent top layer (105) above the decorative layer, and
- an intermediate layer (104) situated between the decorative layer and the top layer,
which intermediate layer (104) is transparent, and at least 75 wt.% of the intermediate layer (104) is made from a protective material which comprises a polyurethane composition which is the reaction product of a polyester polyol, a polyether polyol and an isocyanate, and wherein the polyurethane composition is a thermoset polymer material.

2. Panel according to claim 1, wherein the respective layers of the laminated multi-layer structure are directly or indirectly attached onto each other.

3. Panel according to one of the preceding claims, wherein the polyurethane composition is a cross-linked polymer.

4. Panel according to one of the preceding claims, wherein the polyester polyol has a weight average molar mass Mw in the range of 500 to 20,000, and comprises preferably a polyester polyol having linear monomers of 5 to 8 carbon atoms.

5. Panel according to one of the preceding claims, wherein the polyether polyol has a weight average molar mass Mw in the range of 400 to 10,000, and comprises preferably a polyether polyol having branched monomers of 2 to 5 carbon atoms.

6. Panel according to one of the preceding claims, wherein the isocyanate is a di-isocyanate and/or tri-isocyanate, preferably methylene diphenyl di-isocyanate and/or, wherein the protective material contains 5 - 50 wt.% reacted polyester polyol and/or, wherein the protective material contains 10 - 40 wt.% reacted polyether polyol, and/or, wherein the protective material contains 5 - 20 wt.% reacted isocyanate.

7. Panel according to one of the preceding claims, wherein the protective material comprises a filler material as an additive, such as microfibers and/or alumina, preferably in a range of 0.2 - 5 wt.% with respect to the protective material.

8. Panel according to one of the preceding claims, wherein the intermediate layer (104) is directly attached onto the decorative layer and/or onto the top layer.

9. Panel according to one of the preceding claims, wherein the top side of the top layer (105) is embossed with a relief (106,107), which relief preferably corresponds to the decorative image of the decorative layer (103).

10. Panel according to one of the preceding claims, wherein the intermediate layer (104) has a grammage of 20 up to 80 g/m2and/or, wherein the intermediate layer (104) is colorless and/or, wherein the intermediate layer (104) has a low reflectance of 4%, 3%, 2% or lower.

11. Panel according to one of the preceding claims, comprising a first panel edge (440A) which comprises a first coupling profile (401A), and a second panel edge (440B), preferably opposite to the first panel edge, comprising a second coupling profile (401B) being designed to engage by interlocking with said first coupling profile (401A) of an adjacent panel, both in horizontal direction and in vertical direction, wherein the first coupling profile (401A) and the second coupling profile (401B) are preferably configured such that two of such panels (400A, 400B) can be coupled to each other by means of a lowering movement.

12. Panel according to one of the preceding claims, comprising at least one third coupling profile (402A) and at least one fourth coupling profile (402B) located respectively at a third panel edge (441A) and a fourth panel edge (441B), wherein the third coupling profile (402A) comprises:
- a sideward tongue extending in a direction substantially parallel to the upper side of the core,
- at least one second downward flank lying at a distance from the sideward tongue, and
- a second downward groove formed between the sideward tongue and the second downward flank,
wherein the fourth coupling profile (402B) comprises:
- a third groove configured for accommodating at least a part of the sideward tongue of the third coupling profile of an adjacent panel, said third groove being defined by an upper lip and a lower lip, wherein said lower lip is provided with an upward locking element,
wherein the third coupling profile (402A) and the fourth coupling profile (402B) are configured such that two of such panels (400A, 400B) can be coupled to each other by means of a turning movement, wherein, in coupled condition: at least a part of the sideward tongue (404B) of a first panel (400B) is inserted into the third groove (404A) of an adjacent, second panel (400A), and wherein at least a part of the upward locking element (406A) of said second panel (400A) is inserted into the second downward groove (406B) of said first panel (400B).

13. Use of an additional layer (104) in a laminated multi-layer structure of a panel (100) in particular a floor panel, ceiling panel or wall panel, wherein the additional layer (104) is transparent, and is made from a protective material which comprises a polyurethane composition which is the reaction product of a polyester polyol, a polyether polyol and an isocyanate, and wherein the polyurethane composition is a thermoset polymer material, in particular wherein the polyurethane composition is a cross-linked polymer.

14. Use according to claim 13, wherein the laminated multi-layer structure of the panel (100) comprises:
- a core layer (102),
- a decorative layer (103) above the core layer,
- a transparent top layer (105) above the decorative layer,
and the additional layer (104) is applied as an intermediate layer (104) situated between the decorative layer (103) and the top layer (105).

15. Use according to claim 14, in a panel according to one of the claims 2-12.

## Patentansprüche

1. Tafel (100), insbesondere Bodentafel, Deckentafel oder Wandtafel, mit einer laminierten Mehrschichtstruktur, die Folgendes umfasst:
- eine Kernschicht (102),
- eine dekorative Schicht (103) oberhalb der Kernschicht,
- eine transparente Deckschicht (105) oberhalb der dekorativen Schicht, und
- eine Zwischenschicht (104), die sich zwischen der dekorativen Schicht und der Deckschicht befindet,
wobei die Zwischenschicht (104) transparent ist und mindestens 75 Gew.-% der Zwischenschicht (104) aus einem Schutzmaterial hergestellt sind, das eine Polyurethanzusammensetzung umfasst, die das Reaktionsprodukt eines Polyesterpolyols, eines Polyetherpolyols und eines Isocyanats ist, und wobei die Polyurethanzusammensetzung ein duroplastisches Polymermaterial ist.

2. Tafel nach Anspruch 1, wobei die jeweiligen Schichten der laminierten Mehrschichtstruktur direkt oder indirekt aneinander angebracht sind.

3. Tafel nach einem der vorhergehenden Ansprüche, wobei die Polyurethanzusammensetzung ein vernetztes Polymer ist.

4. Tafel nach einem der vorhergehenden Ansprüche, wobei das Polyesterpolyol eine gewichtsmittlere Molmasse Mw im Bereich von 500 bis 20.000 aufweist und vorzugsweise ein Polyesterpolyol mit linearen Monomeren aus 5 bis 8 Kohlenstoffatomen umfasst.

5. Tafel nach einem der vorhergehenden Ansprüche, wobei das Polyetherpolyol eine gewichtsmittlere Molmasse Mw im Bereich von 400 bis 10.000 aufweist und vorzugsweise ein Polyetherpolyol mit verzweigten Monomeren aus 2 bis 5 Kohlenstoffatomen umfasst.

6. Tafel nach einem der vorhergehenden Ansprüche, wobei das Isocyanat ein Di- und/oder Triisocyanat, vorzugsweise Methylendiphenyldiisocyanat, ist und/oder, wobei das Schutzmaterial 5 - 50 Gew.-% umgesetztes Polyesterpolyol enthält und/oder, wobei das Schutzmaterial 10 - 40 Gew.-% umgesetztes Polyetherpolyol enthält und/oder, wobei das Schutzmaterial 5 - 20 Gew.-% umgesetztes Isocyanat enthält.

7. Tafel nach einem der vorhergehenden Ansprüche, wobei das Schutzmaterial ein Füllmaterial als Additiv, wie z. B. Mikrofasern und/oder Aluminiumoxid, vorzugsweise in einem Bereich von 0,2 - 5 Gew.-% in Bezug auf das Schutzmaterial umfasst.

8. Tafel nach einem der vorhergehenden Ansprüche, wobei die Zwischenschicht (104) direkt auf der dekorativen Schicht und/oder auf der Deckschicht angebracht ist.

9. Tafel nach einem der vorhergehenden Ansprüche, wobei die Oberseite der Deckschicht (105) mit einem Relief (106, 107) geprägt ist, wobei das Relief vorzugsweise dem dekorativen Bild der dekorativen Schicht (103) entspricht.

10. Tafel nach einem der vorhergehenden Ansprüche, wobei die Zwischenschicht (104) ein Flächengewicht von 20 bis zu 80 g/m2 aufweist und/oder, wobei die Zwischenschicht (104) farblos ist und/oder, wobei die Zwischenschicht (104) einen niedrigen Reflexionsgrad von 4 %, 3 %, 2 % oder niedriger aufweist.

11. Tafel nach einem der vorhergehenden Ansprüche, umfassend eine erste Tafelkante (440A), die ein erstes Kopplungsprofil (401A) umfasst, und eine zweite Tafelkante (440B), vorzugsweise gegenüber der ersten Tafelkante, umfassend ein zweites Kopplungsprofil (401B), das dazu gestaltet ist, durch Ineinandergreifen mit dem ersten Kopplungsprofil (401A) einer benachbarten Tafel in Eingriff zu kommen, sowohl in horizontaler Richtung als auch in vertikaler Richtung, wobei das erste Kopplungsprofil (401A) und das zweite Kopplungsprofil (401B) vorzugsweise so konfiguriert sind, dass zwei solcher Tafeln (400A, 400B) mittels einer Absenkbewegung aneinander gekoppelt werden können.

12. Tafel nach einem der vorhergehenden Ansprüche, umfassend mindestens ein drittes Kopplungsprofil (402A) und mindestens ein viertes Kopplungsprofil (402B), die sich jeweils an einer dritten Tafelkante (441A) und einer vierten Tafelkante (441B) befinden, wobei das dritte Kopplungsprofil (402A) umfasst:
- eine seitliche Feder, die sich in einer Richtung im Wesentlichen parallel zu der oberen Seite des Kerns erstreckt,
- mindestens eine zweite abwärtsgerichtete Flanke, die in einem Abstand von der seitlichen Feder liegt, und
- eine zweite abwärtsgerichtete Nut, die zwischen der seitlichen Feder und der zweiten abwärtsgerichteten Flanke gebildet ist,
wobei das vierte Kupplungsprofil (402B) umfasst:
- eine dritte Nut, die dazu konfiguriert ist, mindestens einen Teil der seitlichen Feder des dritten Kupplungsprofils einer benachbarten Tafel aufzunehmen, wobei die dritte Nut von einer Oberlippe und einer Unterlippe definiert ist, wobei die Unterlippe mit einem aufwärtsgerichteten Verriegelungselement versehen ist,
wobei das dritte Kopplungsprofil (402A) und das vierte Kopplungsprofil (402B) so konfiguriert sind, dass zwei solcher Tafeln (400A, 400B) mittels einer Drehbewegung aneinander gekoppelt werden können, wobei, im gekoppelten Zustand: mindestens ein Teil der seitlichen Feder (404B) einer ersten Tafel (400B) in die dritte Nut (404A) einer benachbarten, zweiten Tafel (400A) eingesetzt ist und wobei mindestens ein Teil des aufwärtsgerichteten Verriegelungselements (406A) der zweiten Tafel (400A) in die zweite abwärtsgerichtete Nut (406B) der ersten Tafel (400B) eingesetzt ist.

13. Verwendung einer zusätzlichen Schicht (104) in einer laminierten Mehrschichtstruktur einer Tafel (100), insbesondere einer Bodentafel, Deckentafel oder Wandtafel, wobei die zusätzliche Schicht (104) transparent ist und aus einem Schutzmaterial hergestellt ist, das eine Polyurethanzusammensetzung umfasst, die das Reaktionsprodukt eines Polyesterpolyols, eines Polyetherpolyols und eines Isocyanats ist, und wobei die Polyurethanzusammensetzung ein duroplastisches Polymermaterial ist, insbesondere, wobei die Polyurethanzusammensetzung ein vernetztes Polymer ist.

14. Verwendung nach Anspruch 13, wobei die laminierte Mehrschichtstruktur der Tafel (100) umfasst:
- eine Kernschicht (102),
- eine dekorative Schicht (103) oberhalb der Kernschicht,
- eine transparente Deckschicht (105) oberhalb der dekorativen Schicht,
und die zusätzliche Schicht (104) als Zwischenschicht (104) aufgebracht ist, die sich zwischen der dekorativen Schicht (103) und der Deckschicht (105) befindet.

15. Verwendung nach Anspruch 14, in einer Tafel nach einem der Ansprüche 2-12.

## Revendications

1. Panneau (100), en particulier un panneau de plancher, un panneau de plafond ou un panneau mural, ayant une structure multicouche stratifiée qui comprend :
une couche centrale (102),
une couche décorative (103) par-dessus la couche centrale,
une couche supérieure transparente (105) par-dessus la couche décorative, et
une couche intermédiaire (104) située entre la couche décorative et la couche supérieure, la couche intermédiaire (104) étant transparente, et au moins 75 % en poids de la couche intermédiaire (104) étant constituée d'un matériau de protection qui comprend une composition de polyuréthane qui est le produit de réaction d'un polyester polyol, d'un polyol de polyéther et d'un isocyanate, et dans lequel la composition de polyuréthane est un matériau polymère thermodurcissable.

2. Panneau selon la revendication 1, dans lequel les couches respectives de la structure multicouche stratifiée sont directement ou indirectement jointes l'une à l'autre.

3. Panneau selon l'une quelconque des revendications précédentes, dans lequel la composition de polyuréthane est un polymère réticulé.

4. Panneau selon l'une quelconque des revendications précédentes, dans lequel le polyester-polyol a une masse molaire moyenne en poids Mw se situant dans la plage de 500 à 20.OOO, et comprend de préférence un polyester-polyol comportant des monomères linéaires de 5 à 8 atomes de carbone.

5. Panneau selon l'une quelconque des revendications précédentes, dans lequel le polyester-polyol a une masse molaire moyenne en poids Mw se situant dans la plage de 400 à 10. 000, et comprend de préférence un polyester-polyol comportant des monomères réticulés de 2 à 5 atomes de carbone.

6. Panneau selon l'une quelconque des revendications précédentes, dans lequel l'isocyanate est un di-isocyanate et/ou un tri-isocyanate, de préférence du méthylène diphényle di-isocyanate et/ou dans lequel le matériau de protection contient de 5 à 50 % en poids de polyester-polyol ayant réagi, et/ou dans lequel le matériau de protection contient de 10 à 40 % en poids de polyester-polyol ayant réagi, et/ou dans lequel le matériau de protection contient de es5 à 20 % en poids d'isocyanate ayant réagi.

7. Panneau selon l'une quelconque des revendications précédentes, dans lequel le matériau de protection comprend une matière de remplissage en tant d'additif, comme des microfibres et/ou de l'alumine, de préférence se situant dans la plage de 0,2 à 5 % en poids par rapport au matériau de protection.

8. Panneau selon l'une quelconque des revendications précédentes, dans lequel la couche intermédiaire (104) est directement jointe à la couche décorative et/ou à la couche supérieure.

9. Panneau selon l'une quelconque des revendications précédentes, dans lequel le côté supérieur de la couche supérieure (105) est estampé d'un relief (106, 107), relief qui de préférence correspond à l'image décorative de la couche décorative (103).

10. Panneau selon l'une quelconque des revendications précédentes, dans lequel la couche intermédiaire (104) a un grammage compris entre 20 et 80 g/m2 et/ou dans lequel la couche intermédiaire (104) est incolore et/ou dans lequel la couche intermédiaire (104) a une réflectance faible de 4 %, 3 %, 2 % ou inférieure.

11. Panneau selon l'une quelconque des revendications précédentes, comprenant un premier bord de panneau (440A) qui comporte un premier profil de couplage (401A), et un deuxième bord de panneau (440B), de préférence à l'opposé du premier bord de panneau, comportant un deuxième profil de couplage (401B) conçu pour entrer en contact par enclenchement avec ledit premier profil de couplage (401A) d'un panneau adjacent, aussi bien dans la direction horizontale que dans la direction verticale, dans lequel le premier profil de couplage (401A) et le deuxième profil de couplage (401B) sont de préférence configurés de sorte que deux de ces panneaux (400A, 400B) puissent être joints l'un à l'autre en exerçant un mouvement descendant.

12. Panneau selon l'une quelconque des revendications précédentes, comprenant au moins un troisième profil de couplage (402A) et au moins un quatrième profil de couplage (402B) situés respectivement à hauteur d'un troisième bord de panneau (441A) et d'un quatrième bord de panneau (441B), dans lequel le troisième profil de couplage (402A) comprend :
une languette latérale s'étendant dans une direction sensiblement parallèle au côté supérieur de la couche centrale,
au moins un deuxième flanc descendant situé à une certaine distance de la languette latérale, et
une deuxième rainure descendante formée entre la languette latérale et le deuxième flanc descendant,
dans lequel le quatrième profil de couplage (402B) comprend :
une troisième rainure configurée pour recevoir au moins une partie de la languette latérale du troisième profil de couplage d'un panneau adjacent,
ladite troisième rainure étant définie par une lèvre supérieure et une lèvre inférieure, dans lequel ladite lèvre inférieure est dotée d'un élément de
verrouillage vers le haut,
dans lequel le troisième profil de couplage (402A) et le quatrième profil de couplage (402B) sont configurés de sorte que deux de ces panneaux (400A, 400B) puissent être joints l'un à l'autre en exerçant un mouvement de rotation, dans lequel, lorsque dans une condition couplée : au moins une partie de la languette latérale (404B) d'un premier panneau (400B) est insérée dans la troisième rainure (404A) d'un deuxième panneau adjacent (400A), et dans lequel au moins une partie de l'élément de verrouillage vers le haut (406A) dudit deuxième panneau (400A) est insérée dans la deuxième rainure descendante (406B) dudit premier panneau (400B).

13. Utilisation d'une couche supplémentaire (104) dans une structure multicouche stratifiée d'un panneau (199), en particulier d'un panneau de plancher, d'un panneau de plafond ou d'un panneau mural, dans lequel la couche supplémentaire (104) est transparente, et est constituée d'un matériau de protection qui comprend une composition de polyuréthane qui est le produit de réaction d'un polyester-polyol, d'un polyol de polyéther et d'un isocyanate, et dans lequel la composition de polyuréthane est un matériau polymère thermodurcissable, en particulier dans lequel la composition de polyuréthane est un polymère réticulé.

14. Utilisation selon la revendication 13, dans lequel la structure multicouche stratifiée (100) comprend :
une couche centrale (102),
une couche décorative (103) au-dessus de la couche centrale,
une couche supérieure transparente (105) au-dessus de la couche décorative, et
la couche supplémentaire (104) est appliquée en tant que couche intermédiaire (104) située entre la couche décorative (103) et la couche supérieure (105).

15. Utilisation selon la revendication 14, dans un panneau selon l'une quelconque des revendications 2 à 12.
